# FASCICULE DE BREVET EUROPEEN

(11) **EP 3 865 326 B1**
(45) Date de publication et mention de la délivrance du brevet: **01.11.2023**
(21) Numéro de dépôt: 21157357.1
(22) Date de dépôt: 16.02.2021
(51) Int. Cl.: B60H 1/00, B61D 27/00

(54) **COMPARTIMENT DE VÉHICULE DE TRANSPORT DE PASSAGERS COMPORTANT UN SYSTÈME DE VENTILATION D'AIR**
FAHRGASTRAUM EINES TRANSPORTFAHRZEUGS FÜR FAHRGÄSTE MIT BELÜFTUNGSSYSTEM
PASSENGER TRANSPORT VEHICLE COMPARTMENT COMPRISING AN AIR VENTILATION SYSTEM

(30) Priorité: 17.02.2020 FR 2001561
(43) Date de publication de la demande: 18.08.2021
(73) Titulaire: SpeedInnov, 75008 Paris (FR)
(72) Inventeur: LANDREAUD, Christophe, 17250 LES ESSARDS (FR); BERNARD, Alexandre, 17340 CHÂTELAILLON-PLAGE (FR)
(74) Mandataire: Lavoix

(56) Documents cités:
- EP-A1- 2 767 422
- DE-C1- 19 831 880
- US-A1- 2003 173 056

## Description

La présente invention concerne un compartiment de véhicule de transport de passagers comportant un système de ventilation d'air. L'invention concerne également un véhicule de transport de passagers associé.

L'invention se situe dans le domaine des véhicules de transport de passagers, en particulier des véhicules ferroviaires.

Les véhicules de transport de passagers comportent des voitures, ces voitures comportant un ou plusieurs compartiments adaptés au transport de passagers. Ces compartiments comportent en particulier des sièges, par exemple positionnés en rangées.

Classiquement, un compartiment adapté au transport de passagers comporte un système de ventilation d'air, qui peut comporter un système de chauffage et/ou de refroidissement de l'air, permettant de diffuser de l'air dans le compartiment à une température adéquate, et plus généralement d'assurer une circulation de l'air dans le compartiment, la circulation de l'air comprenant des mouvements de l'air, de diffusion et d'induction, selon des flux de l'écoulement de l'air. Un tel système de ventilation comporte notamment une ou plusieurs gaines de ventilation.

Divers systèmes de ventilation pour véhicules de transport de passagers, en particulier ferroviaires, sont connus.

Le document EP 2 767 422 A1 décrit un dispositif de voûte en anse pour toit de véhicule, par exemple de bus, intégrant un système d'air conditionné. Le document US2003/173956 A1 décrit un système d'aération pour compartiment de transport de passagers.

Les systèmes de ventilation doivent être régulièrement maintenus, en particulier nettoyés afin d'assurer la qualité de l'air diffusé, mais également maintenus pour en assurer le fonctionnement (remplacement des pièces etc).

Par exemple, il existe des trains équipés de systèmes de ventilation situés sous les sièges des passagers, adaptés à diffuser de l'air vers l'intérieur du compartiment selon un flux d'écoulement montant. De tels systèmes ne sont pas pratiques pour la maintenance, car il est nécessaire de démonter les sièges ou des parties des sièges pour accéder au système de ventilation.

De manière générale, l'accessibilité au système de ventilation pour la maintenance se pose, car toute maintenance nécessitant un démontage est coûteuse et le temps de maintenance est long.

L'invention a pour objet de remédier aux inconvénients de l'état de la technique.

A cet effet, l'invention propose un compartiment de véhicule de transport de passagers selon la revendication 1.

Le compartiment de véhicule de transport de passagers selon l'invention peut présenter une ou plusieurs des caractéristiques des revendications dépendantes 2 à 6, prises indépendamment ou dans toutes leurs combinaisons techniquement acceptables.
de manière à effectuer une diffusion d'air vers lesdites baies vitrées.

Selon un autre aspect, l'invention propose un véhicule de transport de passagers comportant au moins un compartiment de transport de passagers tel que décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est une vue schématique en coupe d'une partie de compartiment de transport de passagers selon l'invention ;
[Fig 2] la figure 2 est une vue schématique, en coupe d'un système de ventilation d'air selon un mode de réalisation de l'invention ;
[Fig 3] la figure 3 illustre schématiquement plusieurs positions de la grille de diffusion d'air du système de ventilation de la figure 2.

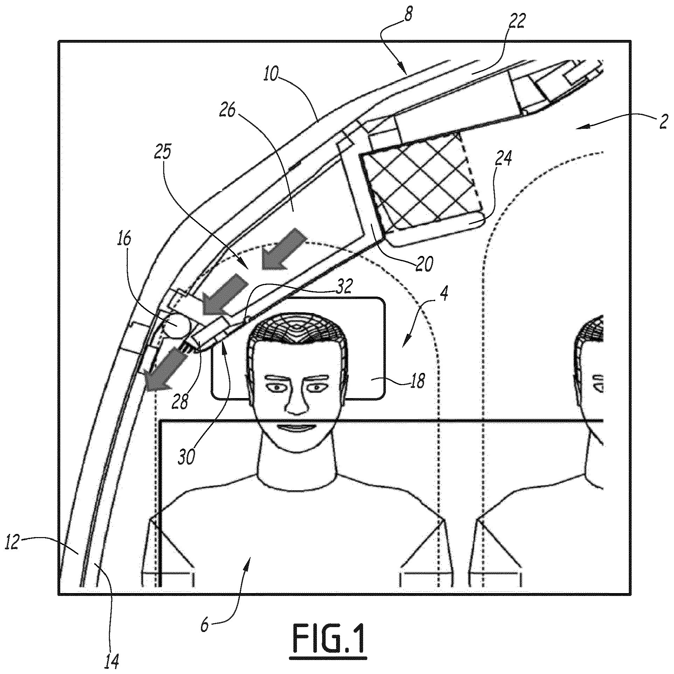

L'invention sera plus particulièrement décrite dans son application à un véhicule ferroviaire de transport de passagers, par exemple un train ou un métro, en référence aux figures 1 à 3.

La figure 1 représente schématiquement une portion de compartiment 2 de transport de voyageurs, d'un train (non représenté).

Le compartiment 2 comporte des sièges 4 pour passagers 6, les sièges étant par exemple agencés par rangées, et chaque rangée comportant au moins deux sièges 4 placés côte à côte.

Le compartiment 2 fait partie d'une voiture 8 du véhicule ferroviaire, qui comporte une paroi externe 10.

Au moins une baie vitrée 12 est fixée sur la paroi externe 10, de manière à laisser pénétrer la lumière du jour et à permettre aux passagers 6 d'observer le paysage à l'extérieur du véhicule.

Le compartiment 2 comporte, par exemple pour chaque baie vitrée 12, un store 14, qui est adapté à s'enrouler autour d'un tambour (ou enrouleur) 16, positionné à proximité d'un appui-tête 18 de siège 4 situé à côté de la baie vitrée (placement classiquement appelée « fenêtre » dans les trains).

Le compartiment 2 comporte en outre un voussoir 20, positionné au-dessus des sièges 4, par exemple fixé à un élément du plafond 22 du compartiment 2.

Le voussoir 20 sert de support de fixation à divers éléments du compartiment 2, par exemple à une étagère « porte veste » 24, située au-dessus des sièges 4, en particulier au-dessus des sièges situés côté « fenêtre ».

Dans le mode de réalisation de la figure 1, le compartiment 2 comprend un système de ventilation d'air 25, dont une gaine de ventilation 26 est placée entre le plafond 22 et le voussoir 20.

Le système de ventilation d'air 25 comprend d'autres éléments, par exemple permettant un acheminement de l'air vers la gaine de ventilation 26, un chauffage et/ou un refroidissement de l'air, qui sont connus et ne sont pas décrits en détail ici.

La gaine de ventilation 26 permet une diffusion d'air, par exemple de l'air extérieur, éventuellement chauffé ou refroidi, vers l'intérieur du compartiment 2 de transport de passagers. Par exemple, la diffusion d'air est effectuée selon les flèches représentées à la figure 1, vers la baie vitrée 12.

En outre, la gaine de ventilation 26 permet également une circulation d'un flux d'air entrant dans la gaine en provenance de l'intérieure du compartiment 2, de manière à former un flux de renouvellement de l'air dans le compartiment 2 de transport de passagers.

Dans le mode de réalisation illustré à la figure 1, le voussoir 20 comporte un haut-parleur 28, placé de préférence à proximité d'un appui-tête 18 du siège 4, permettant de diffuser des annonces dans le compartiment 2.

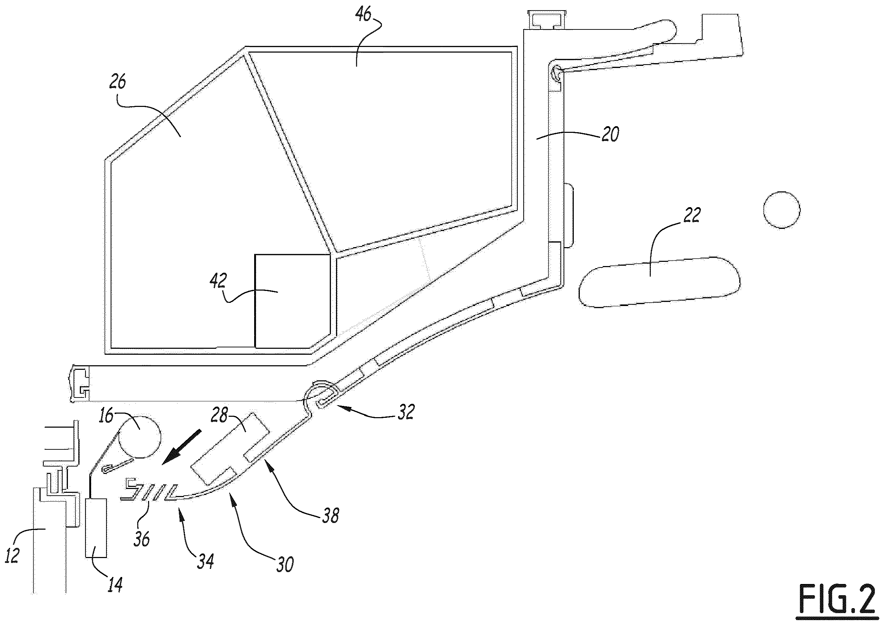

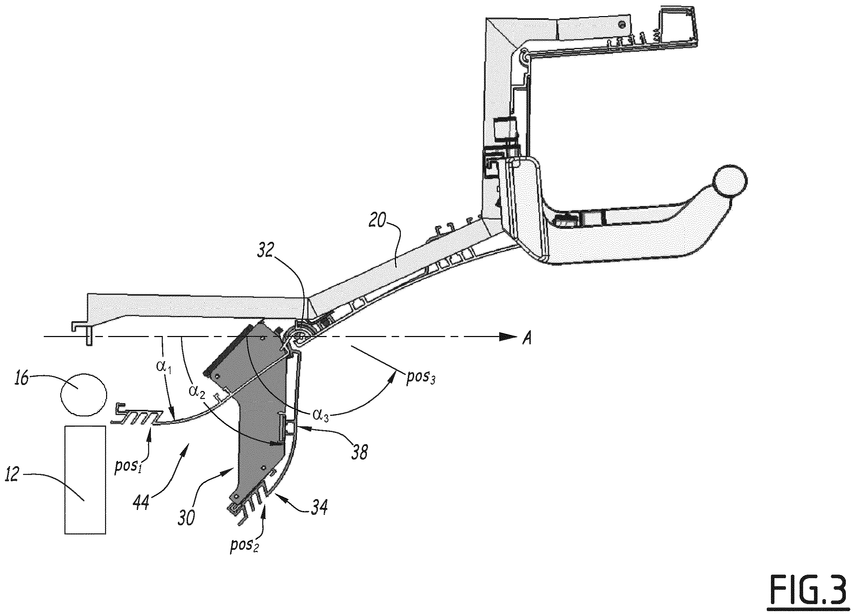

Le système de ventilation d'air 25 comprend en outre une ou plusieurs grille(s) de diffusion d'air 30. Dans la suite, une seule grille de diffusion d'air 30 sera décrite plus en détail ci-après en référence aux figures 2 et 3.

La grille de diffusion d'air 30 est avantageusement montée sur une charnière pivotable 32, de manière à être déplaçable entre une position fermée, une position ouverte et une position de décrochage, dans laquelle la grille 30 est décrochée (ou dégondée) de la charnière 32.

Dans un mode de réalisation le véhicule ferroviaire est un véhicule à deux niveaux, chaque voiture 8 comportant deux compartiments 2 de passagers superposés, un compartiment bas et un compartiment haut.

La grille de diffusion d'air 30, montée sur la charnière pivotable 32, est décrite plus en détail en référence aux figures 2 et 3.

Cette grille de diffusion d'air 30 comporte une première portion 34 à ailettes 36, et une deuxième portion 38.

Les ailettes 36 permettent la diffusion de l'air issu de la gaine de ventilation 26 du système de ventilation d'air 25 vers la baie vitrée 12.

Dans un mode de réalisation, la première portion 34 et la deuxième portion 38 de la grille de diffusion d'air 30 sont liées par un joint souple.

Par exemple, le joint souple est un joint étanche, de préférence en caoutchouc, par exemple en caoutchouc EPDM (éthylène-propylène-diène monomère).

De préférence, la première portion 34 et la deuxième portion 38 de la grille de diffusion d'air 30 sont intégrées dans un profil en aluminium.

La grille de diffusion d'air 30 est fixée à la charnière pivotable 32.

De préférence, la charnière pivotable 32 est de type charnière à piano.

Dans un mode de réalisation, le système de ventilation d'air 25 comprend également une ou plusieurs extensions 42 de la gaine de ventilation 26, permettant de diriger le flux d'air vers la grille de diffusion d'air 30.

La figure 3 illustre plusieurs positions de la grille de diffusion d'air 30.

En effet, la grille de diffusion d'air 30, grâce au montage sur la charnière 32, est adaptée à pivoter entre une première position POS₁ fermée, une deuxième position POS₂ ouverte et une troisième position POS₃ de décrochage.

La position fermée POS₁ est la position de la grille de diffusion d'air 30 lorsque le compartiment 2 est utilisé pour le transport de passagers. La POS₁ est une position dans laquelle la deuxième portion 38 de la grille de diffusion d'air 30 est à un angle α₁ par rapport à l'axe horizontal A. Cette position fermée permet la circulation de flux d'air, comme expliqué ci-dessus, de la gaine de ventilation 26 vers l'intérieur du compartiment 2 et de l'intérieur du compartiment vers la gaine de ventilation 26. L'angle α₁ est par exemple inférieur à 60°.

Dans la position ouverte POS₂, la deuxième portion 38 de la grille de diffusion d'air 30 est positionnée sensiblement verticalement (angle α₂ compris par exemple entre 80° égal à 100°), ce qui laisse un espace d'ouverture 44 permettant le nettoyage de parties du système de ventilation, notamment de la gaine de ventilation 26. Cet espace d'ouverture 44 permet également un accès à d'autres éléments du compartiment 2, par exemple à l'enrouleur 16 de store, pour une éventuelle maintenance.

Enfin, lorsque la rotation de la grille de diffusion d'air 30 autour de la charnière 32 est telle que l'angle α₃ entre l'axe horizontal A et la deuxième portion 38 de la grille de diffusion d'air 30 est supérieur à 100°, par exemple égal à 150°, la grille de diffusion d'air 30 est dégondée. Avantageusement, l'accès à d'autres éléments du compartiment 2, par exemple l'accès à une autre gaine de diffusion d'air 46, qui est une gaine de diffusion d'air secondaire par rapport à la gaine de diffusion d'air 26 (gaine primaire), est facilité.

Avantageusement, le nettoyage et la maintenance du système de ventilation, et d'autres éléments du compartiment sont facilités.

Avantageusement, grâce à l'invention, le nettoyage des gaines de ventilation 26, 46 est réalisable sans démontage des sièges.

## Revendications

1. Compartiment (2) de véhicule de transport de passagers comportant un système de ventilation d'air (25), ledit système de ventilation (25) comportant au moins une grille (30) de diffusion d'air, le compartiment (2) comportant en outre des sièges (4) pour passagers (6) et un voussoir (20) positionné au-dessus desdits sièges (4), **caractérisé en ce que** ladite grille (30) de diffusion d'air est montée sur une charnière pivotable (32), ladite charnière (32) étant fixée audit voussoir (20), la grille (30) de diffusion étant configurée pour être déplaçable autour de ladite charnière (32) entre une position fermée, dans laquelle la grille de diffusion est à un premier angle (α₁) par rapport à un axe horizontal (A), une position ouverte dans laquelle la grille de diffusion est à un deuxième angle (α₂) par rapport à l'axe horizontal (A) et une position de décrochage dans laquelle la grille de diffusion est à un troisième angle (α₃) par rapport à l'axe horizontal (A), les premier, deuxième et troisième angles étant distincts.

2. Compartiment de véhicule de transport de passagers selon la revendication 1, dans lequel ladite grille (30) de diffusion d'air comporte une première portion (34) à ailettes (36) et une deuxième portion (38) adaptée à être fixée à ladite charnière (32).

3. Compartiment de véhicule de transport de passagers selon la revendication 2, dans lequel lesdites première portion (34) et deuxième portion (36) sont liées par un joint souple et intégrées dans un profil en aluminium.

4. Compartiment de véhicule de transport de passagers selon l'une des revendications 1 à 3, dans lequel ladite charnière (32) pivotable est de type charnière à piano.

5. Compartiment de véhicule de transport de passagers selon l'une des revendications 1 à 4, comportant en outre des baies vitrées (12), le système de ventilation d'air (25) comportant une gaine de ventilation (42) supportée par ledit voussoir (20).

6. Compartiment de véhicule de transport de passagers selon la revendication 5, le système de ventilation d'air (25) comportant au moins une extension de gaine de ventilation (42), ladite grille (30) de diffusion d'air étant positionnée en sortie d'une dite extension de gaine de ventilation de manière à effectuer une diffusion d'air vers lesdites baies vitrées (12).

7. Véhicule de transport de passagers **caractérisé en ce qu'**il comporte au moins un compartiment (2) de transport de passagers conforme aux revendications 1 à 6.

8. Véhicule de transport de passagers selon la revendication 7 comportant au moins une voiture, ladite voiture comportant deux compartiments (2) de transport de passagers superposés.

## Patentansprüche

1. Abteil (2) eines Fahrzeugs zur Beförderung von Personen mit einem Belüftungssystem (25), wobei das Belüftungssystem (25) mindestens ein Luftverteilungsgitter (30) aufweist, wobei das Abteil (2) ferner Sitze (4) für Personen (6) und eine Wölbung (20) aufweist, die über den Sitzen (4) positioniert ist, **dadurch gekennzeichnet, dass** das Luftverteilungsgitter (30) an einem schwenkbaren Scharnier (32) angebracht ist, wobei das Scharnier (32) an der Wölbung (20) befestigt ist, wobei das Luftverteilungsgitter (30) derart ausgelegt ist, dass es um das Scharnier (32) zwischen einer geschlossenen Position, in der sich das Verteilungsgitter in einem ersten Winkel (α₁) im Verhältnis zu einer horizontalen Achse (A) befindet, einer offenen Position, in der sich das Luftverteilungsgitter in einem zweiten Winkel (α₂) im Verhältnis zu der horizontalen Achse (A) befindet, und einer ausgehängten Position, in der sich das Verteilungsgitter in einem dritten Winkel (α₃) im Verhältnis zu der horizontalen Achse (A) befindet, bewegbar ist, wobei der erste, zweite und dritte Winkel verschieden sind.

2. Abteil eines Fahrzeugs zur Beförderung von Personen nach Anspruch 1, wobei das Luftverteilungsgitter (30) einen ersten Abschnitt (34) mit Lamellen (36) und einen zweiten Abschnitt (38) aufweist, der zur Befestigung an dem Scharnier (32) geeignet ist.

3. Abteil eines Fahrzeugs zur Beförderung von Personen nach Anspruch 2, wobei der erste Abschnitt (34) und der zweite Abschnitt (36) durch eine flexible Verbindung verbunden und in ein Aluminiumprofil integriert sind.

4. Abteil eines Fahrzeugs zur Beförderung von Personen nach einem der Ansprüche 1 bis 3, wobei das schwenkbare Scharnier (32) vom Typ Klavierscharnier ist.

5. Abteil eines Fahrzeugs zur Beförderung von Personen nach einem der Ansprüche 1 bis 4, das ferner Fensteröffnungen (12) aufweist, wobei das Belüftungssystem (25) einen Lüftungskanal (42) umfasst, der von der Wölbung (20) getragen wird.

6. Abteil eines Fahrzeugs zur Beförderung von Personen nach Anspruch 5, wobei das Belüftungssystem (25) mindestens eine Lüftungskanalverlängerung (42) umfasst, wobei das Luftverteilungsgitter (30) am Ausgang einer solchen Lüftungskanalverlängerung derart positioniert ist, dass es eine Luftverteilung in Richtung der Fensteröffnungen (12) bewirkt.

7. Fahrzeug zur Beförderung von Personen, **dadurch gekennzeichnet, dass** es mindestens ein Abteil (2) nach den Ansprüchen 1 bis 6 aufweist.

8. Fahrzeug zur Beförderung von Personen nach Anspruch 7 mit mindestens einem Wagen, wobei der Wagen zwei übereinander angeordnete Abteile (2) zur Beförderung von Personen aufweist.

## Claims

1. Passenger transport vehicle compartment (2) comprising an air ventilation system (25), said ventilation system (25) comprising at least one air diffusion grille (30), the compartment (2) further comprising seats (4) for passengers (6) and a segment (20) positioned above said seats (4), **characterised in that** said air diffusion grille (30) is mounted on a pivotable hinge (32), said hinge (32) being fixed to said segment (20), the air-diffusing grille (30) being configured to be movable about said hinge (32) between a closed position, in which the diffuser grille is at a first angle (α₁) with respect to a horizontal axis (A), an open position, in which the diffuser grille is at a second angle (α₂) with respect to the horizontal axis (A) and an unhooking position in which the diffusion grille is at a third angle (α₃) with respect to the horizontal axis (A), the first, second and third angles being distinct.

2. Passenger transport vehicle compartment according to claim 1, wherein said air diffusion grille (30) comprises a first portion (34) with fins (36) and a second portion (38) adapted to be fixed to said hinge (32).

3. Passenger transport vehicle compartment according to claim 2, wherein said first portion (34) and second portion (36) are bonded by a flexible joint and integrated into an aluminium profile.

4. Passenger vehicle compartment according to one of claims 1 to 3, wherein said pivotable hinge (32) is of the piano hinge type.

5. Passenger transport vehicle compartment according to one of claims 1 to 4, also comprising bay windows (12), the air ventilation system (25) comprising a ventilation duct (42) supported by the said segment (20).

6. Passenger transport vehicle compartment according to claim 5, the air ventilation system (25) comprising at least one ventilation duct extension (42), the said air diffusion grille (30) being positioned at the outlet of a said ventilation duct extension so as to diffuse air towards the said picture windows (12).

7. Passenger transport vehicle, **characterised in that** it comprises at least one passenger transport compartment (2) in accordance with claims 1 to 6.

8. Passenger transport vehicle according to claim 7 comprising at least one carriage, said carriage comprising two superimposed passenger transport compartments (2).
